# EUROPEAN PATENT SPECIFICATION

(11) **EP 1 401 310 B1**
(45) Date of publication and mention of the grant of the patent: **28.02.2007**
(21) Application number: 02745801.7
(22) Date of filing: 25.06.2002
(51) Int. Cl.: A47J 27/18, A47J 27/14

(54) **AUTOMATIC PASTA-COOKER FOR RESTAURANTS, SPAGHETTI-HOUSES AND THE LIKE**
AUTOMATISCHES TEIGWARENGARGERÄT FÜR RESTAURANTS, SPAGHETTIHÄUSER UND DERGLEICHEN
CUISEUR AUTOMATIQUE POUR PATES DESTINE A DES RESTAURANTS, DES ETABLISSEMENTS SPECIALISES DANS LES SPAGHETTIS ET SIMILAIRES

(30) Priority: 03.07.2001 IT MI20011410
(43) Date of publication of application: 31.03.2004
(73) Proprietor: Contessini, Paola, Wandsworth London SW18 3LL (GB)
(72) Inventor: Trombetta, Ennio, 20010 Bareggio (IT)
(74) Representative: Pizzoli, Pasquale Vincenzo
(86) International application number: PCT/IT2002/000418
(87) International publication number: WO 2003/003886

(56) References cited:
- EP-A- 0 296 549
- WO-A-01/35803
- WO-A-02/43538
- US-A- 4 901 632
- US-B1- 6 360 652

## Description

The present invention relates to an automatic pasta-cooker that enables the fast and programmed cooking at atmospheric pressure of pasta and similar food.

It is known that in restaurants, spaghetti-houses and other similar public commercial concerns there is the need to prepare rapidly a high number of pasta dishes in order to serve a high number of customers in a time as short as possible. Automatic apparatuses for cooking pasta are already known, for example, from the Italian patent n.1,207,735, from the US patent n.5,142,966 and from the Italian patent n.1,207,741. Such known apparatuses are designed to operate at high pressure and therefore have all the typical drawbacks of apparatuses not operating at atmospheric pressure.

A similar pasta cooker is known from WO 02/43538A and is considered to represent the closest prior art.

Therefore, the object of the present invention is to provide an automatic pasta-cooker operating at atmospheric pressure so as to be free from the above mentioned drawbacks. Said object is achieved by means of an automatic pasta-cooker whose features are specified in claim 1. Other features of said pasta-cooker are specified in the following claims.

The automatic pasta-cooker according to the present invention offers the advantage that it can be operated at atmospheric pressure by acting on a control panel governed by a relevant software.

Another advantage of the automatic pasta-cooker according to the present invention consists in the fact that the pasta being cooked, the cooking water and the inside of its containers never get in contact with the operator's hands thus assuring to totally comply with the hygienic rules.

These and other advantages and features of the automatic pasta-cooker according to the present invention will be clear to those skilled in the art from the following detailed description of an embodiment thereof with reference to the annexed drawings, wherein:
Fig.1 shows a schematical view in side elevation of an automatic pasta-cooker according to the present invention; and
Fig.2 shows a similar view of two pasta-cookers which are combined in order to be supplied with two different kinds of pasta which therefore require different cooking times, for instance spaghetti and penne.

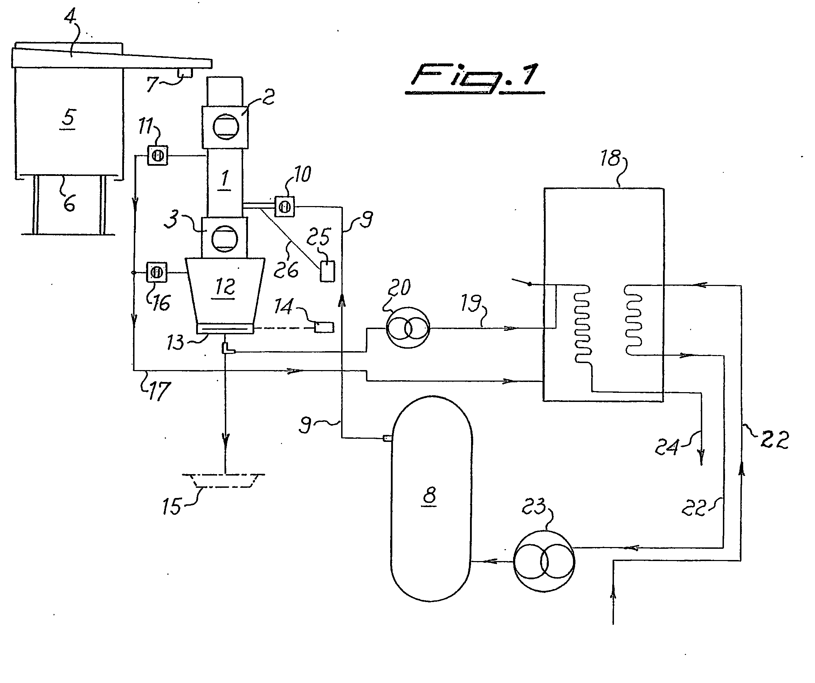

With reference to figure 1, there is seen that the automatic pasta-cooker according to the present invention essentially consists of a cooking chamber 1, having a feed valve 2 upstream and a discharge valve 3 downstream. The feed valve 2, when in the open position, enables the pasta to enter the cooking chamber 1 after having been let off from a turning-over device 4 provided on the container 5 wherein the pasta which will have to be cooked is arranged.

The container 5 is also provided with an electrically operated ram 6 which pushes upward the pasta until it reaches a chute not visible in the figure. The chute is provided with a vibrating mechanism which moves the pasta to a cradle provided with a weighing device. This device closes a pasta delivery valve (not shown in the figure) when the weight of the pasta contained in the cradle reaches the programmed weight. At the same time, the turning-over device 4 rises rotating around pivot 7 until it reaches an almost vertical position, whereby the pasta contained therein slides down into the cooking chamber 1 passing through the feed valve 2 when the latter is in the opened position. A suitable software controls the chronological sequence of these movements.

A boiler 8 through a pipe 9 supplies hot water inside the cooking chamber 1. To this purpose, the latter is provided with an inflow valve 10. A vent valve 11 is arranged at the top of chamber 1 having the purpose of avoiding an overpressure inside the chamber.

The discharge valve 3, operated by suitable controls governed by the software of the pasta-cooker, opens when the pasta contained in the cooking chamber 1 reaches the programmed first cooking grade. Through valve 3, the cooked pasta descends into a second cooking chamber 12 whose structure is similar to that of the overlying chamber 1, but with a different shape. In fact the diameter of the second cooking chamber 12 is about twice the diameter of the overlying chamber 1 wherein the pasta, for instance spaghetti or other long pasta, is in a vertical position whereas in the second cooking chamber 12 it takes a horizontal position since it has already been partly cooked. Therefore also the shape of the second cooking chamber 12 extends horizontally.

The second chamber 12 in practice has the function of stabilizing the cooking of the pasta as well as that of acting as a temporary container for the pasta waiting to be delivered.

The bottom of chamber 12 is closed by a guillotine shutter 13 controlled in turn by a pneumatic piston 14. The guillotine shutter 13 closes the bottom of chamber 12 in a watertight manner and when it opens it lets off the cooked pasta onto a plate 15, arranged therebelow to be served to the customer.

The second chamber 12 is also provided with a vent valve 16 having the same function of valve 11 applied to cooking chamber 1. The downflow pipes downstream from valves 11 and 16 form a single line 17 conveying vapor inside a heat exchanger 18. Through another pipe 19, the final cooking water drained from chamber 12 is also sent to exchanger 18 by means of a draining pump 20. This pump is connected to the control panel and allows removal of a determined amount of cooking water, so as to assure that the cooked pasta is properly wet during the sauce addition. The small quantity of water still adhering to the pasta discharged into chamber 12 also assures a further little degree of cooking.

The heat exchanger 18 provided in the pasta-cooker according to the present invention enables the recovery of most of the heat contained in the cooking water drained from chamber 12. To this purpose, the heat exchanger to which vapor is sent through pipe 17 and hot water through pipe 19, takes into thermal contact the fluids running in said pipes with the mains water supplied to the boiler 8 through pipe 22 by means of pump 23. The heat exchanger 18 is also provided with a pipe 24 for the final draining of the cooking water.

The mains water is preferably demineralized before supplying it to the heat exchanger 18. Another preferable solution is that of properly insulating the two cooking chambers 1 and 12 and providing them with internal resistors and thermostats. All the valve regulating devices and other control devices are connected to a single control panel where the cooking time and the quantity of pasta to be taken from container 5 can be set.

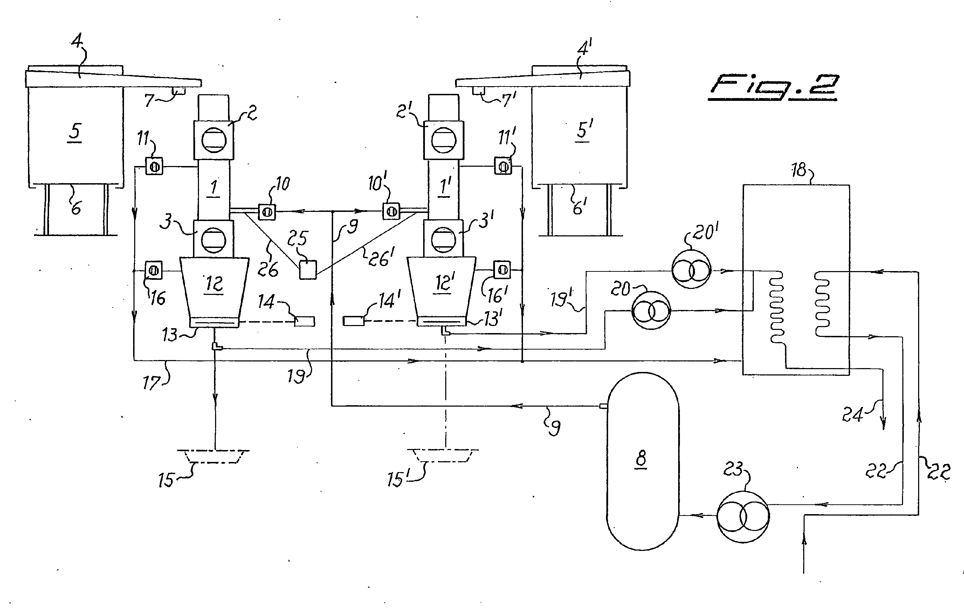

When it is desired to cook simultaneously two different kinds of pasta, e.g. spaghetti and penne, which have different cooking times, it is possible to combine two pasta-cookers in the way described hereafter with reference to figure 2. The two pasta-cookers are mounted side by side and are supplied with hot water by a single boiler 8. Also the heat exchanger 18 is one for both combined pasta-cookers as well as pipes 17 and 9 which are used for both pasta-cookers. With the apparatus illustrated in fig.2 it is possible to fill plate 15 with spaghetti and plate 15' with a different pasta, e.g. penne. The operation of the pair of cooking chambers 1' and 12' is substantially the same as already described for the pair of cooking chambers 1 and 12. The same applies to container 5' and to all other elements referred to by the same number, but without prime, in fig.1.

A modification is for example that of slidably mounting containers 5 and 5' on one or more rails so as to assure a faster supply of dry pasta to the cooking chambers. For example, it is possible to arrange container 5 on a rail located at the rear of the two combined pasta-cookers and container 5' on a rail located at the front thereof.

An addition, for example, is that of providing a container 25 close to one of the two cooking chambers, e.g. close to chamber 12, in which container there is contained salted water with a precisely determined amount of salt. Container 25 is connected through a small tube 26 to the hot water supply pipe 9 downstream from valve 10. When valve 10 opens in order to let hot water into chamber 1, a programmed quantity of salted water is sucked from container 25 through the small tube 26. The percentage of salt in the water contained in container 25 is adjusted according to the taste of the customers and to other variables of the cooking process.

The pasta-cooker according to the present invention has been designed and described for the automatic cooking of pasta, but it can obviously be used also for cooking legumes or other dry food. In fact it is sufficient to make small modifications which can be made by those skilled in the art.

## Claims

1. An automatic pasta-cooker consisting of a first and a second cooking chamber and no further cooking chambers, wherein said first cooking chamber (1) is provided with a valve (2) for feeding raw pasta and with an underlying valve (3) for discharging cooked pasta, said second cooking chamber (12) being arranged below the discharge valve (3) of the first chamber (1) and being provided at the bottom with a shutter (13) for discharging cooked pasta, said first chamber (1) being connected to a pipe (9) for supplying hot water produced by a boiler (8), said second chamber (12) being connected to a pipe (19) for draining the cooking water, and both chambers (1, 12) being connected through vent valves (11, 16) to a pipe (17) for draining vapor, said draining pipes (17, 19) terminating into a heat exchanger (18) for pre-heating the mains water prior to feeding it to the boiler (8).

2. An automatic pasta-cooker consisting of two communicating cooking chambers according to claim 1, **characterized in that** it further includes a container (5) for the raw pasta provided with a ram (6) and a turning-over device (4) suitable to feed the raw pasta to the first cooking chamber (1).

3. An automatic pasta-cooker according to claim 1, **characterized in that** the shutter (13) is of guillotine type and is driven by a pneumatic piston (14).

4. An automatic pasta-cooker according to claim 1, **characterized in that** it further includes a container (25) for salted water provided with a small tube (26) connected to the first cooking chamber (1) through the pipe (9) which supplies the hot water.

5. An automatic pasta-cooker **characterized in that** it comprises at least two pasta-cookers according to one or more of the preceding claims, both being supplied with hot water from a single boiler (8) and connected to a single heat exchanger (18) by means of a single vapor drain pipe (17), two different cooking water drain pipes (19, 19') and two different drain pumps (20, 20').

## Patentansprüche

1. Automatisches Teigwarengargerät, bestehend aus einer ersten und einer zweiten Kochkammer und ohne weitere Kochkammern, bei dem die erste Kochkammer (1) ein Ventil (2) zum Zuführen roher Teigwaren und ein unterlagerten Ventil (3) zur Abgabe gekochter Teigwaren aufweist und die zweite Kochkammer (12) unterhalb des Abgabeventils (3) der ersten Kammer (1) angeordnet ist und am Boden ein Verschlußorgan (13) zur Abgabe gekochter Teigwaren aufweist, wobei die erste Kammer (1) an eine Leitung (9) zur Zufuhr von heißem Wasser angeschlossen ist, das von einem Wassererhitzer (8) erzeugt wird, die zweite Kammer (12) an eine Leitung (19) zur Ableitung des Kochwassers angeschlossen ist und beide Kammern (1, 12) über Lüftungsventile (11, 16) mit einer Leitung (17) zur Ableitung von Dampf verbunden sind, wobei die zur Ableitung von Wasser und Dampf dienenden Leitungen (17, 19) in einen Wärmetauscher (18) zum Vorerhitzen des Leitungswassers vor der Einleitung in den Wassererhitzer (8) münden.

2. Teigwarengargerät besteht aus zwei kommunizierenden Kochkammern gemäß Anspruch 1, **dadurch gekennzeichnet, daß** es weiterhin einen Behälter (5) für die rohen Teigwaren aufweist, der mit einem Stößel (6) und einer Umlenkeinrichtung (4) versehen ist, die geeignet ist, die rohen Teigwaren zu der ersten Kochkammer (1) zuzuführen.

3. Automatisches Teigwarengargerät nach Anspruch 1, **dadurch gekennzeichnet, daß** das Verschlußorgan (13) ein guillotineartiges Verschlußorgan ist und durch einen pneumatischen Kolben (14) angetrieben ist.

4. Automatisches Teigwarengargerät nach Anspruch 1, **dadurch gekennzeichnet, daß** es weiterhin einen Behälter (25) für Salzwasser aufweist, der mit einem kleinen Rohr (26) versehen ist, das über die zur Zufuhr des heißen Wassers dienende Leitung (9) mit der ersten Kochkammer (1) verbunden ist.

5. Automatisches Teigwarengargerät nach, **dadurch gekennzeichnet, daß** es wenigstens zwei Teigwarengargeräte nach einem oder mehreren der vorstehenden Ansprüche aufweist, die beide mit heißem Wasser aus einem einzigen Wassererhitzer (8) versorgt werden und über ein einziges Ventil (17) zur Ableitung von Dampf, zwei verschiedene Leitungen (19, 19') zur Ableitung von Kochwasser und zwei verschiedene Drainagepumpen (20, 20') an einen einzigen Wärmetauscher (18) angeschlossen sind.

## Revendications

1. Cuiseur de pâtes automatique constitué de première et seconde chambres de cuisson, et d'aucune chambre de cuisson supplémentaire, dans lequel ladite première chambre de cuisson (1) est munie d'un clapet (2) pour alimenter des pâtes crues, et d'un clapet sous-jacent (3) pour évacuer les pâtes cuites, ladite seconde chambre de cuisson (12) étant agencée en dessous du clapet d'évacuation (3) de la première chambre (1), et étant munie au niveau du fond d'un obturateur (13) pour évacuer des pâtes cuites, ladite première chambre (1) étant reliée à un tuyau (9) pour alimenter de l'eau chaude produite par un dispositif d'ébullition (8), ladite seconde chambre (12) étant reliée à un tuyau (9) pour drainer l'eau de cuisson, et les deux chambres (1, 12) étant reliées à travers des clapets de mise à l'air libre (11, 16) à un tuyau (17) pour drainer la vapeur, lesdits tuyaux de drainage (17, 19) se terminant en un échangeur thermique (18) pour préchauffer l'eau de réseau principal avant de l'alimenter vers le dispositif d'ébullition (8).

2. Cuiseur de pâtes automatique constitué de deux chambres de cuisson communicantes selon la revendication 1, **caractérisé en ce qu'**il comporte en outre un conteneur (5) pour les pâtes crues muni d'un vérin (6) et d'un dispositif de transfert (4) adapté pour alimenter les pâtes crues vers la première chambre de cuisson (1).

3. Cuiseur de pâtes automatique selon la revendication 1, **caractérisé en ce que** l'obturateur (13) est du type guillotine, et est entraîné par un piston pneumatique (14).

4. Cuiseur de pâtes automatique selon la revendication 1, **caractérisé en ce qu'**il comporte en outre un conteneur (25) pour de l'eau salée muni d'un petit tube (26) relié à la première chambre de cuisson (1) à travers le tuyau (9) qui est alimente l'eau chaude.

5. Cuiseur de pâtes automatique selon la revendication 1, **caractérisé en ce qu'**il comporte au moins deux cuiseurs de pâtes selon l'une quelconque des revendications précédentes, les deux étant alimentés en eau chaude à partir d'un dispositif d'ébullition unique (8) et étant reliés à un échangeur thermique unique (18) par l'intermédiaire d'un tuyau de drainage de vapeur unique (17), de deux tuyaux de drainage d'eau de cuisson différents (19, 19') et de deux pompes de drainage différentes (20, 20').
